# EUROPÄISCHE PATENTSCHRIFT

(11) **EP 3 002 056 B1**
(45) Veröffentlichungstag und Bekanntmachung des Hinweises auf die Patenterteilung: **12.02.2020**
(21) Anmeldenummer: 14003419.0
(22) Anmeldetag: 03.10.2014
(51) Int. Cl.: B01F 11/00, G01N 1/02, G01N 1/38, G01N 1/40, G01N 35/10, G01N 1/10, G01N 1/28, G01N 35/00, G01N 30/00, G01N 30/06

(54) **Mischvorrichtung zum Durchmischen einer Probe während eines SPME-Verfahren**
Mixing equipment for mixing a sample during a solid phase microextraction (SPME) process
Appareil de mélange d'un échantillon au cours d'un procédé d'extraction SPME

(43) Veröffentlichungstag der Anmeldung: 06.04.2016
(73) Patentinhaber: CTC Analytics AG, 4222 Zwingen (CH)
(72) Erfinder: Kernen, Roland, 4132 Muttenz (CH); Zumbach, Melchior, 5600 Lenzburg (CH)
(74) Vertreter: Keller & Partner Patentanwälte AG

(56) Entgegenhaltungen:
- EP-A1- 0 356 883
- EP-A1- 2 446 959
- WO-A1-00/25925
- WO-A1-97/11763
- WO-A2-2007/032039
- US-A1- 2005 276 727
- US-A1- 2009 035 825

## Beschreibung

### Technisches Gebiet

Die Erfindung betrifft ein Verfahren zur Durchmischung einer Probe, wobei eine Lanze zumindest teilweise in einem die Probe umfassenden Probenbehälter positioniert ist während die Probe durchmischt wird.

### Stand der Technik

Vorrichtungen zur Durchmischung einer Probe, bei welchen während des Durchmischens eine Lanze in den Behälter mit der Probe hineinragt, sind im Allgemeinen bekannt. Diese dienen typischerweise dazu, bei einer Probenentnahme aus einer homogenen Probe einen reproduzierbaren Teil der Probe entnehmen zu können. Solche Verfahren, bei welchen während der Entnahme eines Teils der Probe die Probe durchmischt wird, sind insbesondere bei Proben von Vorteil, welche Schwebestoffe oder schwer lösliche Stoffe aufweisen oder als Emulsionen vorliegen. Weiter sind solche Verfahren bei Probenentnahmen von Vorteil, bei welchen sich ein Gleichgewicht zwischen einem adsorbierenden Stoff und der Probe einstellen soll. In diesem Fall kann mittels der Durchmischung zusätzlich das Einstellen des Gleichgewichts beschleunigt werden. Diese Vorteile sind insbesondere auch bei SPME-Verfahren (Solid Phase Micro Extraction) wünschenswert.

Eine bekannte Massnahme zur Durchmischung einer Probe, während dem eine Lanze in den Probenbehälter hineinragt ist die Verwendung eines Magnetrührers, welcher sich im Probenbehälter befindet. Damit wird prinzipiell eine gute Durchmischung erreicht. Nachteilig ist dabei, dass zu Beginn jeweils ein Magnetrührer in den Probenbehälter gelegt werden muss. Neben diesem zusätzlichen Aufwand besteht zudem eine nicht geringe Verschleppungsgefahr von Verschmutzungen, Dies kann zum Beispiel bei Analysen die Resultate verfälschen. Weiter besteht durch unkontrollierte Bewegungen des Magnetrührers die Gefahr, dass die Lanze beschädigt wird. Anderseits besteht die Gefahr, dass sich eine Trombe bildet, womit bei einer als Fiber ausgebildeter Lanze eine Adsorption in unkontrollierbarer Weise verfälscht werden kann und bei einer als Spritze ausgebildeter Lanze Luft angesaugt und damit das gewünschte Volumen verfehlt werden kann. Bei einer Verwendung werden die Magnetrührer nach der Verwendung entsorgt, schlagen einerseits die Kosten zu Buche und anderseits ist das Verfahren weder ökonomisch noch ökologisch durchführbar. Werden die Magnetrührer hingegen aufbereitet, so schlägt der Aufwand für die Reinigung und Desinfektion zu Buche. Nicht zuletzt besteht die Gefahr, dass abgesehen von der Verschleppung von Verunreinigungen auch der Magnetrührer selbst erodiert oder mit der Probe reagiert und so die Probe verfälscht.

Eine weitere bekannte Massnahme besteht darin, bei einem SPME-Verfahren die Fiber in Vibration zu versetzen. Ein solches Verfahren wird zum Beispiel durch die EP 0 992 279 A2 (Varian) offenbart. Damit kann zwar ein schnelleres Einstellen des Gleichgewichts bei der Adsorption erreicht werden, die Probe wird damit aber unbefriedigend durchmischt. Bei erhöhter Vibrationsleistung besteht zudem die Gefahr, dass die Fiber bricht. Die Varian offenbart zudem ein Rotieren des Vials während der Durchführung des SPME-Verfahrens. Mit einer Rotation des Vials kann jedoch keine optimale Durchmischung erreicht werden.

Die DE 196 19 790 C2 (LWG) offenbart ein SPME-Verfahren, bei welchem die Fiber rotiert wird. Damit wird zwar eine Adsorptionszeit verkürzt, aber keine Durchmischung der Probe erreicht.

Weitere gattungsgemässe Verfahren zur Durchmischung einer Probe, bei welchen eine Lanze im Probenbehälter positioniert ist, werden durch die US 2005/276727 A1 (Pawliszyn et. al.), die US 2009/035825 A1 (Appleara) und die WO 00/25925 A1 (Hett-Lab) offenbart.

### Darstellung der Erfindung

Aufgabe der Erfindung ist es, ein dem eingangs genannten technischen Gebiet zugehörendes Verfahren zum Durchmischen einer Probe zu schaffen, während welchem eine Lanze in den Behälter ragt und womit eine effektive Durchmischung der Probe bei relativ geringem Aufwand ermöglicht wird. Weiter liegt der Erfindung die Aufgabe zugrunde, eine Vorrichtung zur Durchführung des Verfahrens bereitzustellen.

Die Lösung der Aufgabe ist durch die Merkmale der Ansprüche 1 und 9 definiert. Gemäss der Erfindung wird zur Durchmischung der Probe der Probenbehälter in eine Bewegung versetzt, wobei der Probenbehälter während der Bewegung mindestens eine erste Position und eine zweite Position einnimmt, wobei ein durch die erste Position und die zweite Position des Probenbehälters gebildeter Schnittraum kleiner ist als der Probenbehälter selbst.

Eine entsprechende Vorrichtung zur Durchmischung der Probe umfasst eine Aufnahmevorrichtung zum Aufnehmen eines Behälters, eine Antriebseinrichtung zum Antreiben der Aufnahmevorrichtung sowie eine Lanze zum Einführen in die Aufnahmevorrichtung. Bei in die Aufnahmevorrichtung hineinragender Lanze und durch die Antriebseinrichtung angetriebener Aufnahmevorrichtung sind eine erste Position und eine zweite Position der Lanze relativ zur Aufnahmevorrichtung derart erreichbar, dass die erste Position der Lanze relativ zur Aufnahmevorrichtung von der zweiten Position der Lanze relativ zur Aufnahmevorrichtung verschieden, vorzugsweise beabstandet ist.

Erfindungsgemäss wird zur Durchmischung der Probe der Behälter relativ zur Lanze bewegt. Die Lanze steht dabei typischerweise still, Damit kann der gesamte Inhalt des Behälters besonders effizient durchmischt werden, da ein Impuls am Behälter den gesamten Inhalt des Behälters erfasst. Die Durchmischung erfolgt dabei einerseits durch die Bewegung des Behälters selbst. Anderseits wird die Durchmischung der Probe im Behälter durch die Lanze unterstützt. Bei flüssigen oder gasigen Proben wirkt die Relativbewegung zwischen Lanze und dem Behälter als Strombrecher oder Stromstörer. Damit kann verhindert werden, dass infolge der Trägheit der Probe die Probe sich lediglich mit dem Behälter mit bewegt. Dieses Mischverfahren hat weiter den Vorteil, dass zum Beispiel gegenüber Magnetrührern weniger Luft eingerührt wird, womit wiederum zum Beispiel Probenentnahmen während des Mischvorgangs robuster ausgeführt werden können.

Vorzugsweise ist die Lanze zur Entnahme einer Probe ausgebildet.

Besonders bevorzugt wird während der Durchmischung der Probe ein Teil der Probe, vorzugsweise mit der Lanze, entnommen. Die Lanze ist dazu vorzugsweise zur Entnahme einer Probe ausgebildet. Damit handelt es sich beim vorliegenden Verfahren vorzugsweise um ein Probenentnahmeverfahren, insbesondere für die chemische Analytik. Die Probenentnahme kann durch verschiedene dem Fachmann bekannte Techniken mittels der Lanze entnommen werden.

Zum Beispiel kann es sich bei der Lanze um eine Spritze handeln, mit welcher im Anschluss zum Beispiel ein Chromatograph, insbesondere ein Gaschromatograph (GC) oder ein Flüssigchromatograph (LC), wie zum Beispiel ein Hochdruckflüssigchromatograph (HPLC) gespiesen wird. Bei der Lanze kann es sich aber auch lediglich um ein Probeentnahmerohr oder Kanüle handeln, welche direkt mit einem Analysengerät oder einer anderen Einrichtung verbunden ist. Damit muss die entnommene Probe auch nicht zwingend (direkt) zur Analyse entnommen werden. Mit dieser Einrichtung können Proben auch während der Durchmischung in kleinere Probeneinheiten aufgeteilt werden, wobei Schwankungen in den Stoffkonzentrationen der Probeneinheiten vermieden werden können.

In Varianten kann das Verfahren auch auf andere Bereiche, vorzugsweise der analytischen Chemie gerichtet sein. So kann die Lanze selbst als Messgerät ausgebildet sein. Das Messgerät kann zum Beispiel als Thermometer, Refraktometer, Photometer, Trübungsmessgerät und dergleichen ausgebildet sein.

In einer besonders bevorzugten Ausführungsform ist die Lanze als Fiber ausgebildet, insbesondere zur Durchführung einer Festphasenmikroextraktion, wobei der Teil der Probe durch die Fiber adsorbiert wird. Die Fiber umfasst dabei eine Adsorbensbeschichtung, welche den Teil der Probe aufnehmen kann. Die SPME-Verfahren sind dem Fachmann hinreichend bekannt. Das Verfahren ist bei SPME von besonderem Vorteil, da die Fiber mehrere Aufgaben erfüllt. Einerseits adsorbiert die Fiber die zu analysierenden Stoffe aus der Probe. Anderseits wird mit der Fiber gleichzeitig die Probe, insbesondere die flüssige Probe, gemischt. Die Mischung hat wiederum zur Folge, dass einerseits ein intensiver Kontakt zwischen Probe und Fiber erreicht wird, um den Analyten schneller aufnehmen zu können und anderseits die Probe während der Adsorption weitgehend homogen gehalten werden kann. Damit kann auch die Reproduzierbarkeit der Probenentnahme erhöht werden. Eventuell an der Fiber anhaftende Luftbläschen können durch die Durchmischung der Probe entfernt werden. Zudem wird eine optimale Benetzung der Fiber erreicht. Schliesslich wird durch das vorliegende Mischverfahren das Einrühren von Luft, wie es typischerweise bei Magnetrührern vorkommt, weitgehend vermieden.

In Varianten kann die Lanze auch wie bereits oben ausgeführt als Analysengerät oder Spritze ausgebildet sein.

Erfindungsgemäss umfasst der Probenbehälter eine über eine Haltevorrichtung geführte Behälteröffnung und einen über eine Aufnahmevorrichtung geführten Behälterboden, wobei zur Durchmischung der Probe die Aufnahmevorrichtung und die Haltevorrichtung in eine

Relativbewegung versetzt werden. Damit kann eine Schüttelbewegung erreicht werden, welche eine optimale Durchmischung der Probe ermöglicht. Die Änderung der Orientierung des Behälters erlaubt besonders vielfältige Bewegungen, welche mit relativ kleinen Bewegungen bereits eine turbulente Durchmischung ermöglichen können.

Bevorzugt wird der Probenbehälter zur Durchmischung der Probe im Bereich der Behälteröffnung gehalten, während der Behälterboden in Bewegung versetzt wird. Damit kann eine Bewegung des Behälters in der Art eines Vortexers erreicht werden, womit eine gute Durchmischung der Probe erreicht wird. Der Behälter wird bevorzugt um einen Winkel von weniger als dem Arkustangens des Behälterbodendurchmessers geteilt durch die Behälterhöhe verschwenkt. Damit wird erreicht, dass die eingetauchte Lanze, respektive Fiber, nicht durch eine Bewegung des Behälters beschädigt wird.

Dazu umfasst die Vorrichtung vorzugsweise eine Haltevorrichtung zum Halten eines Bereichs einer Öffnung eines Behälters sowie eine Aufnahmevorrichtung zur Aufnahme eines Bereichs eines Behälterbodens. Die Haltevorrichtung ist vorzugsweise fix, während die Aufnahmevorrichtung über einen Antrieb bewegbar ausgebildet ist.

Die Haltevorrichtung kann derart beschaffen sein, dass sie im Wesentlichen als Stütze oder Führung eines oberen Bereichs des Behälters dient. Im einfachsten Fall kann die Haltevorrichtung lediglich als Öffnung in einer Halteplatte ausgebildet sein. Die Öffnung weist dabei vorzugsweise einen grösseren Durchmesser auf als der obere Bereich des Behälters, so dass ein Verkanten des Behälters in der Öffnung verhindert werden kann. Damit kann, je nach ausgeführter Bewegung des Behälterbodens, der Behälter innerhalb der Öffnung auch um die eigene Achse rotieren.

In einer bevorzugten Ausführungsform umfasst die Haltevorrichtung eine Klemmeinrichtung, insbesondere ein Backenfutter, zum Halten eines Behälters. Die Öffnung der Haltevorrichtung kann damit auch mit einer Klemmeinrichtung versehen sein, womit der Behälter besser gehalten werden kann. Dem Fachmann ist aber klar, dass der Behälter nicht beliebig festgehalten werden darf, damit die Ausführung der Bewegung des Behälterbodens ohne Beschädigung des Behälters möglich bleibt. Entweder kann der Behälter lose gehalten werden oder die Haltevorrichtung kann hinreichend flexibel ausgebildet sein um die Bewegung des Behälterbodens aufzunehmen.

Eine solche Klemmeinrichtung kann zum Beispiel als Backenfutter ausgebildet sein. In einer besonders bevorzugten Ausführungsform handelt es sich dabei um ein Backenfutter, bei welchem lediglich eine Backe bewegbar ist. Damit wird ein konstruktiv einfaches Futter erreicht. Die Backe kann während der Durchführung des Verfahrens mit hinreichend geringer Federkraft den oberen Bereich des Behälters festklemmen.

In Varianten kann der Behälter auch mittig gehalten werden, während er in Bereich des Behälterbodens bewegt wird.

Vorzugsweise wird die Behälteröffnung während der Durchmischung der Probe derart gehalten, dass die Behälteröffnung einen Fixpunkt relativ zur Lanze aufweist, Diese Ausbildung des Verfahrens ist von besonderem Vorteil, da damit ein durch die verschiedenen Positionen des Behälters gebildete Schnittraum der Behälteröffnung relativ gross ist, so dass die Lanze, respektive eine Fiber auch während des Schüttelvorgangs gefahrlos in und aus dem Behälter geführt werden kann. Der Fixpunkt liegt bei einem zylindrischen Behälter bevorzugt auf der Zylinderachse, insbesondere im Bereich der Öffnung der Zylinderachse, in welchem der Behälter gehalten ist.

In Varianten kann auf den Fixpunkt der Behälteröffnung während des Verfahrens auch verzichtet werden.

Die Ausbildung des Fixpunktes im Öffnungsbereich des Behälters ist von besonderem Vorteil wenn der Behälter ein mit der Lanze durchdringbares Septum umfasst. In diesem Fall liegt der Fixpunkt von Vorteil während dem Durchmischen der Probe im Septum. Damit wird ein besonders bevorzugtes Verfahren ermöglicht, wobei die Fiber bei verschlossenem Behälter durch das Septum in die Probe des Behälters taucht und wobei gleichzeitig der Behälter geschüttelt wird.

Die Flexibilität des Septums und der Fixpunkt des Septums, durch welchen die Lanze respektive die Fiber ragt, bezüglich der Schüttelbewegung im Septum, ermöglicht eine Durchführung eines SPME-Verfahrens bei verschlossenem Behälter, ohne dass z.B, ein Magnetrührer eingesetzt werden muss.

Im SPME-Verfahren wird typischerweise eine Fiber in einer Kanüle, ähnlich einer Spritze, geführt. Die Kanüle durchdringt im Verfahren zuerst das Septum des Behälters (sofern vorhanden), bevor die Fiber über einen Stössel aus der Kanüle gefahren wird.

Da die Fiber typischerweise eher spröde sind, ist die Fiber bevorzugt stabilisiert, so dass durch die Schüttelbewegung keine Beschädigung der Fiber riskiert werden muss. Vorzugsweise ist die Fiber dazu als länglicher Hohlkörper mit in Längsrichtung verlaufendem Hohlraum ausgebildet. Im Hohlraum ist bevorzugt ein Kern zur Stabilisierung der als Hohlkörper ausgebildeten Fiber angeordnet. Der Kern ist vorzugsweise als Draht, insbesondere als metallischer Draht, zum Beispiel als Stahldraht ausgebildet.

In Varianten kann auf die Ausführung der Fiber mit einem Kern zur Stabilisierung auch verzichtet werden.

Beim Durchdringen des Septums mit einer Kanüle besteht die Gefahr, dass ein Teil des Septums ausgestanzt wird, womit die Probe verunreinigt werden kann. Um diesen Effekt zu verhindern umfasst der Kern am proximalen Ende vorzugsweise eine Spitze zum Durchdringen eines Septums. Die Spitze weist eine Form eines Kreiskegels auf, wobei der Kreisdurchmesser dem Fiberdurchmesser der vorzugsweise kreiszylindrischen Fiber entspricht.

In Varianten kann auf die Spitze auch verzichtet werden.

Vorzugsweise wird der Behälterboden während der Durchmischung mit einem Zykloidgetriebe entlang einer Hypotrochoiden bewegt.

Dazu umfasst die Antriebseinrichtung vorzugsweise ein Zykloidgetriebe. Zykloidgetriebe sind einfach in der Herstellung und damit auch kostengünstig. Die Konstruktion solcher Getriebe ist dem Fachmann hinreichend bekannt. Im Verfahren hat sich gezeigt, dass neben einer besonders optimalen, turbulenten Durchmischung auch die störende Trombenbildung weitgehend vermieden werden kann. Die Trombenbildung ist insbesondere bei Entnahme von Flüssigkeiten mit Spritzen aufgrund des Einsaugens von Luftblasen sowie beim Einsatz von Fiber in der SPME-Analyse aufgrund der Tatsache, dass durch Luftblasen an der Fiber die Adsorption verfälscht wird, zu verhindern. Weiter hat die Ausbildung des Zykloidgetriebes den Vorteil, dass mit relativ grossen Zahnrädern geringe Exzentritäten erreichbar sind. Zudem kann eine Position nahe am Zentrum eingenommen werden, so dass das Vial einfach eingesetzt werden kann.

Vorzugsweise umfasst das Zykloidgetriebe ein äusseres Zahnrad mit radial nach innenragenden Zähnen und ein mit dem äusseren Zahnrad zusammenwirkendes inneres Zahnrad mit radial nach aussen ragenden Zähnen, wobei die Aufnahmevorrichtung am Inneren Zahnrad ausgebildet ist.

Das Getriebe umfasst besonders bevorzugt lediglich ein äusseres Zahnrad mit radial nach innen ragenden Zähnen und ein entsprechendes inneres Zahnrad mit geringerem Durchmesser und kleinerer Anzahl Zähnen, welche radial nach aussen ragen und in Eingriff mit dem äusseren Zahnrad stehen. Das äussere Zahnrad ist feststehend. Das innere Zahnrad ist exzentrisch an der Antriebswelle rotierbar gelagert. Mit der Antriebswelle wird die Drehachse des inneren Zahnrads entlang einer Kreisbahn geführt, während über das äussere Zahnrad das innere Zahnrad zusätzlich rotiert wird.

Behälteraufnahme ist vorzugsweise auf dem inneren Zahnrad angeordnet. Die Behälteraufnahme umfasst vorzugsweise im Wesentlichen eine den Aussenabmessungen des Behälterbodens entsprechende Umrandung, in welche der Behälter gestellt werden kann, Die Behälteraufnahme kann über ein Kugelgelenk mit dem inneren Zahnrad verbunden sein, so dass die Bewegung zwischen Behälteraufnahme und innerem Zahnrad aufgenommen werden kann.

Vorzugsweise ist die Behälteraufnahme exzentrisch auf dem inneren Zahnrad angeordnet, damit nicht ausschliesslich triviale hypotrochoide Kurven erreichbar sind. Die Exzentrität der Behälteraufnahme auf dem inneren Zahnrad kann dabei einstellbar sein, womit in einfacher Weise unterschiedliche Bewegungsbahnen erreicht werden können. Damit kann die Schüttelbewegung zum Beispiel einer Behältergrösse oder einer Probeneigenschaft (z.B. Viskosität oder dergleichen) angepasst werden.

Die Bewegung entlang der damit erreichten Hypotrochoiden ergibt eine besonders gute Durchmischung der Probe. Die Eigenrotation des Behälters kann entweder unterbunden werden, indem die Auflage rotierbar ist oder sie kann mit einer entsprechenden Führung im oberen Bereich respektive im Bereich der Öffnung aufgenommen werden, indem die Gleitreibung zwischen Haltevorrichtung und Behälter hinreichend klein gehalten wird.

In Varianten können mit dem Behälterboden auch andere Bewegungen ausgeführt werden, um eine Durchmischung der Probe zu erreichen. Zum Beispiel kann ein einfacher Exzenterantrieb für eine Behälteraufnahme vorgesehen sein. Weiter kann eine Behälterhalterung auch mit einem oder mehreren Magneten in Bewegung versetzt werden. Die Bewegungsbahn kann zum Beispiel sternförmig oder dergleichen ausgebildet sein. Für die Bewegung der Vialhalterung könnte auch ein Planetengetriebe vorgesehen sein um eine Kleeblattform zu erreichen. Nachteilig ist, dass sehr kleine Zahnräder für kleine Exzentritäten vorgesehen sein müssten, so dass eine Schüttelvorrichtung konstruktiv aufwendig und anfällig für Beschädigungen würde.

Eine Schüttelvorrichtung, bei welcher der Behälter, respektive der Behälterboden mittels Zykloidgetriebe bewegt wird, kann selbstverständlich auch losgelöst von der Lanze vorgesehen sein. So kann zum Beispiel ein herkömmlicher Vortexer statt mit einem Exzenterantrieb mit einem solchen Zykloidgetriebe ausgestattet sein.

Vorzugsweise ist ein Verhältnis zwischen einem Radius des inneren Zahnrads und einem Radius des äusseren Zahnrads grösser als 0.8, vorzugsweise zwischen 0.84 und 0.92, insbesondere bevorzugt 0.88. Unter Radius wird beim inneren Zahnrad der Umkreisradius respektive Kopfkreisradius verstanden. Beim äusseren Zahnrad wird dabei ein Radius zum Zahntal des Zahnrades respektive der Fusskreisradius verstanden. Das optimale Radienverhältnis ist insbesondere auch abhängig von der Grösse des Zykloldgetriebes. Ein Verhältnis zwischen Radius des Behälters und Radius des äusseren Zahnrads kann dabei zum Beispiel zwischen 0.5 bis 1 liegen. Damit wird eine besonders optimale Schüttelbewegung erreicht.

Vorzugsweise weisen das innere Zahnrad und das äussere Zahnrad möglichst wenige Zähne auf. Prinzipiell ist es damit von Vorteil, wenn das innere Zahnrad n-1 Zähne hat, während das äussere Zahnrad n Zähne hat. Insbesondere kann das innere Zahnrad zum Beispiel 7 Zähne und das äussere Zahnrad 8 Zähne umfassen. Damit kann in einfacher Weise auch das optimale Verhältnis der Umkreisradien (siehe oben) erreicht werden. Weiter ergeben sich damit auch konstruktive Vorteile, da so ein robusteres Getriebe geschaffen werden kann. In Varianten kann das äussere Zahnrad auch 7, 6 oder weniger sowie 9, 10 oder mehr Zähne aufweisen, während das innere Zahnrad entsprechend bevorzugt ein Zahn weniger als das äussere Zahnrad aufweist.

Dem Fachmann ist aber klar, dass die Anzahl Zähne der beiden Zahnräder im Prinzip beliebig gewählt sein können, sofern das innere Zahnrad weniger Zähne aufweist als das äussere Zahnrad. Damit kann das äussere Zahnrad auch n Zähne aufweisen, während das innere Zahnrad n-2, n-3 oder n-m mit m<n Zähne aufweist.

In Varianten können auch andere Verhältnisse der Radien der Zahnräder vorgesehen sein. Das das Verhältnis zwischen Radius des Behälters und Radius des grossen Zahnrads kann auch unter 0.5 oder sogar über 1 liegen. Zudem kann letzteres auch variabel sein, insbesondere wenn die Vorrichtung für unterschiedliche Behälter eingesetzt wird.

Bevorzugt wird eine Bewegungsrichtung des Probenbehälters während der Durchmischung umgekehrt. Damit kann die Durchmischung der Probe weiter optimiert werden. Die Richtungsänderung kann periodisch oder aber auch in unregelmässigen zeitlichen Abständen erfolgen.

In Varianten kann auf die Änderung der Bewegungsrichtung des Probenbehälters auch verzichtet werden.

Vorzugsweise umfasst die Vorrichtung eine Temperiervorrichtung, insbesondere eine Heizvorrichtung, eine Kühlvorrichtung oder beides. Damit kann die Probe während der Durchmischung temperiert werden, womit wiederum reproduzierbare Analyseresultate erreicht werden können.

In Varianten kann auf die Temperiervorrichtung auch verzichtet werden.

Die Vorrichtung kann einen Deckel zum Verschliessen der Schüttelvorrichtung umfassen. Damit kann zum Beispiel die Probe während dem Verfahren weitgehend ohne Wärmeverlust respektive ohne einen Wärmegradienten in der Probe zu riskieren, temperiert werden. Besonders bevorzugt ist der Deckel derart mit der Klemmbacke gekoppelt, dass bei geöffnetem Deckel die Klemmbacke geöffnet und bei geschlossenem Deckel die Klemmbacke geschlossen ist. Diese Ausbildung ist besonders bei einer automatischen Beschickung der Vorrichtung mit Behältern von Vorteil. In diesem Fall kann mit einem Roboter ein Behälter, welcher vorzugsweise als Vial ausgebildet ist, zur Vorrichtung geführt werden. Der Deckel wird alsdann mit dem Roboter über ein Betätigungselement entgegen einer Federkraft betätigt, vorzugsweise verschoben, um den Deckel zu öffnen. Gleichzeitig wird durch das Verschieben des Deckels die Klemmbacke der Haltevorrichtung gelöst, so dass bei geöffnetem Deckel das Vial eingeführt werden kann. Wird der Deckel anschliessend durch die Federkraft geschlossen, wird gleichzeitig die Klemmbacke wieder aktiviert, so dass diese den Behälter festklemmt. Diese Ausführungsform zeichnet sich durch den konstruktiv besonders einfachen und kostengünstigen Aufbau aus. Vorzugsweise umfasst der Deckel eine Öffnung durch welche die Lanze auch bei geschlossenem Deckel geführt werden kann. Die Öffnung kann offen, aber auch mit einem Septum oder dergleichen verschlossen sein, welches mit der Lanze durchstochen werden kann.

Dem Fachmann sind auch weitere Ausführungen für die Bedienung des Deckels respektive des Backenfutters bekannt. Die Kopplung zwischen Deckel und Klemmbacke kann auch elektronisch erfolgen, wobei sowohl Deckel als auch Klemmbacke zum Beispiel motorisch oder die Klemmbacke magnetisch betätigbar sein kann.

In Varianten kann auf den Deckel auch verzichtet werden. In diesem Fall kann zum Beispiel eine Klemmbacke direkt durch den Roboter entgegen einer Federkraft bewegt werden, so dass ein Vial in die Öffnung eingefahren werden kann. Beim Loslassen der Klemmbacke klemmt diese alsdann das Vial im oberen Bereich, insbesondere am Deckel fest, so dass der untere Bereich des Vials in Bewegung versetzt werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines horizontalen Schnitts entlang der Antriebswelle einer Vorrichtung zur Durchmischung einer Probe;
- Fig. 2: eine Darstellung gemäss Figur 1 bei verschwenktem Vial;
- Fig. 3: eine schematische Draufsicht auf eine Verschlussvorrichtung in geschlossener Stellung;
- Fig. 4: eine Darstellung gemäss Figur 3 in offener Stellung.

Grundsätzlich sind in den Figuren gleiche Teile mit gleichen Bezugszeichen versehen.

### Wege zur Ausführung der Erfindung

Das nachfolgende Ausführungsbeispiel bezieht sich auf eine Mischvorrichtung 1 zum Durchmischen einer Probe während eines SPME-Verfahrens, d.h. während der Durchmischung einer Probe in einem Vial wird gleichzeitig mittels einer Fiber ein Analyt adsorbiert. Der Vorteil In diesem Verfahren liegt, wie obig bereits ausgeführt, insbesondere darin, dass einerseits die Adsorptionszeit verringert werden kann und anderseits die Homogenität der Probe während der Adsorption gewährleistet ist. Dem Fachmann ist aber klar, dass die Vorrichtung mit geringen Abwandlungen z.B. auch für die Entnahme von Flüssigkeiten mit herkömmlichen Spritzen für die Gas- oder Flüssigchromatographie eingesetzt werden kann, In letzterem Fall liegt ein Vorteil insbesondere darin, dass während der Probenentnahme aus dem Vial die Homogenität der Probe gewährleistet werden kann.

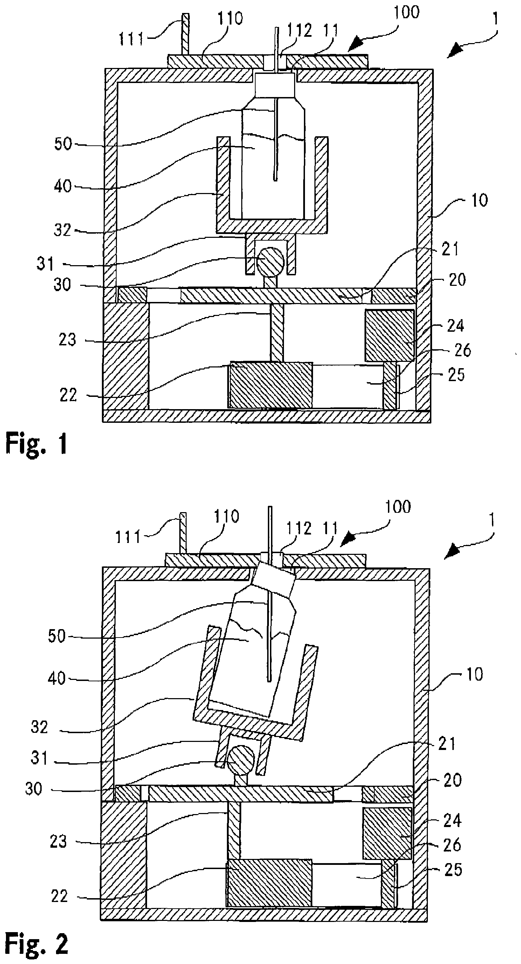

Die Figur 1 zeigt eine schematische Darstellung eines horizontalen Schnitts entlang der Antriebswelle 22 einer Mischvorrichtung 1. Die Mischvorrichtung 1 umfasst im Wesentlichen ein Gehäuse 10, einen Antriebsmotor 24 und ein Zykloidgetriebe mit entsprechenden Zahnrädern 20, 21, sowie eine Vialaufnahme 32 zur Aufnahme eines Vials 40. Innerhalb des Gehäuses 10 ist schematisch eine Heizung/Kühlung 12 dargestellt, womit während der Durchmischung die Probe temperiert werden kann. Diese kann aber auch anderweitig angeordnet sein. Insbesondere kann diese zum Beispiel direkt in der Vialaufnahme 32 integriert sein.

Innerhalb des Gehäuses 10 ist ein erstes äusseres Zahnrad 20 bezüglich des Gehäuses 10 fix angeordnet. Dieses Zahnrad weist acht Zähne auf (nicht dargestellt), welche radial nach innen ragen. Innerhalb des äusseren Zahnrades 20 ist ein inneres Zahnrad 21 rotierbar gelagert. Das innere Zahnrad 21 weist dem äusseren Zahnrad 20 entsprechende Zähne auf, welche radial nach aussen ragen. Das innere Zahnrad 21 weist vorliegend sieben Zähne auf, so dass dessen Durchmesser entsprechend geringer ist, als derjenige des äusseren Zahnrads 20. Das innere Zahnrad 21 steht in Eingriff mit dem äusseren Zahnrad. Das innere Zahnrad 21 ist rotierbar über eine Exzenterwelle 23, welche exzentrisch zum äusseren Zahnrad 20 orientiert ist, mit einer Antriebswelle 22 verbunden, zu welcher die Exzenterwelle ebenfalls exzentrisch orientiert ist. Die Exzentrität ist derart gewählt, dass das innere Zahnrad 21 immer in Eingriff mit dem äusseren Zahnrad 20 steht, Die Antriebswelle 22 wiederum ist koaxial zum äusseren Zahnrad 20 orientiert. Die Antriebswelle 22 ist über einen Antriebsmotor 25 und dessen Motorenwelle 24 angetriebenen Antriebsriemen 26 angetrieben.

Das innere Zahnrad 21 weist eine zum inneren Zahnrad 21 exzentrisch orientierte Gelenkkugel 30 zur Führung der Vialaufnahme 32 auf. Im Betrieb fährt die Gelenkkugel 30 eine Hypotrochoide ab. Anhand der Extzentrität der Gelenkkugel 30 und dem Radienverhältnis zwischen innerem und äusserem Zahnrad 21, 20 kann die Form der Hypotrochoide beeinflusst werden. Dem Fachmann sind diese möglichen Variationen der Bewegungsbahn hinreichend bekannt.

Die Vialaufnahme 32 ist als einseitig offener Zylinder ausgebildet und an der Aussenseite des geschlossenen Bereichs, d.h. aussen am Boden des Zylinders mit einer Gelenkpfanne 31 versehen, in welcher die Gelenkkugel 30 gelagert ist. Das damit gebildete Kugelgelenk dient zur Übertragung der Schüttelbewegung auf das Vial 40.

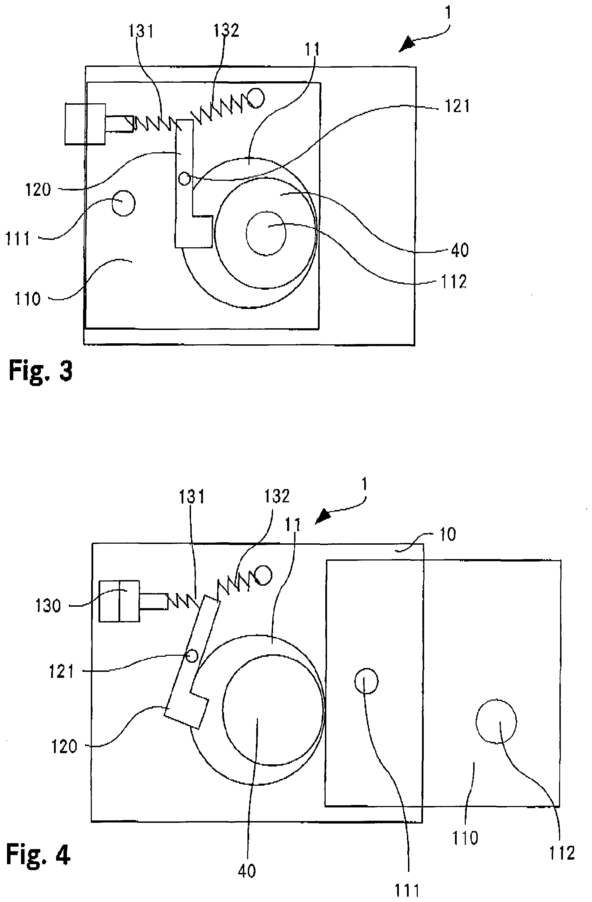

In der Vialaufnahme 32 ist ein Vial 40 angeordnet. Das Gehäuse 10 weist eine Öffnung zum Einführen eines Vials 40 in die Vialaufnahme 32 auf. Diese Öffnung ist mit einem Deckel 110 verschliessbar. Auf die Verschlussvorrichtung 100 als solche wird mit den Figuren 3 und 4 näher eingegangen. Hier sei erwähnt, dass der Deckel eine Fiberöffnung 112 aufweist, durch welche während des Mischvorgangs eine Fiber 50 hindurch in das Vial 40 ragt.

Das Vial Ist vorliegend aufgrund der Übersichtlichkeit der Figur 1 im Verschlussbereich, d.h. vertikal oben vorliegend durch das Gehäuse gehalten. In der Praxis hat sich gezeigt, dass eine spezielle Haltevorrichtung für diesen oberen Bereich des Vials 40 vorteilhaft ist. Es wird ebenfalls in den Figuren 3 und 4 näher darauf eingegangen.

Wird der Antriebsmotor 25 aktiviert, so wird die Rotation der Motorenwelle 24 mit dem Antriebsriemen 26 auf die Antriebswelle 22 übertragen, welche wiederum die Exzenterwelle 23 entlang einer Kreisbahn führt. Damit wird das innere Zahnrad 21 um die eigene Achse rotierend entlang des äusseren Zahnrades 20 ebenfalls auf der Kreisbahn geführt. Die Exzentrisch auf dem inneren Zahnrad 21 angeordnete Gelenkkugel 30 führt damit die hypotrochoide Bewegung aus und überträgt diese auf den Behälterboden.

Die Figur 2 zeigt die Mischvorrichtung gemäss Figur 1 in einem solchen Zustand, bei welchem das Vial entlang der Hypotrochoide nach aussen geführt und damit verschwenkt ist. Die Bewegungsbahn ist so gewählt, dass die Fiber 50 die Wand des Vials 40 nicht berührt. In der Praxis können die Bewegungen, insbesondere die maximale Auslenkwinkel wesentlich kleiner ausfallen.

Die Figur 3 zeigt eine schematische Draufsicht auf eine Verschlussvorrichtung 100 der Mischvorrichtung 1 in geschlossener Stellung, Der Deckel 110 der Verschlussvorrichtung 100 ist vorliegend zur besseren Illustration durchsichtig dargestellt.

Die Verschlussvorrichtung 100 umfasst einen Deckel 110, welcher verschiebbar auf dem Gehäuse 10 über der Öffnung 11 in bekannter Weise verfahren werden kann. Der Deckel umfasst ein Betätigungselement 111, über welches zum Beispiel ein Roboter den Deckel 110 öffnen kann.

In einem besonders bevorzugten Verfahren ist der Roboter derart ausgebildet, dass er in einem einzigen Bewegungsablauf ein Vial 40 transportierend den Deckel 110 öffnen und das Vial 40 durch die Öffnung 11 in die Vialaufnahme 32 absetzen kann.

Um das Verfahren weiter zu vereinfachen ist der Deckel 110 in nicht näher dargestellter Weise derart federbeaufschlagt, dass dieser in der Schliessstellung gehalten wird. Der Roboter öffnet also den Deckel 110 entgegen dieser Federkraft.

Die Verschlussvorrichtung 100 ist weiter derart ausgebildet, dass eine Klemmbacke 120 beim Öffnen des Deckels 110 gleichzeitig geöffnet wird, so dass das Vial 40 in die Vialaufnahme 32 gesetzt werden kann, Im Bereich der Öffnung 11 ist dazu eine hebelförmige Klemmbacke 120 über eine Drehachse 121 derart verschwenkbar gelagert, dass die Klemmbacke 120 in die Öffnung 11 eingeschwenkt werden kann, um ein Vial 40 in einem oberen Bereich festzuklemmen. Die Klemmbacke 120 weist dazu einen Klemmbereich auf, welcher die vordere Seite der Drehachse 121 einnimmt und einen Hebelbereich, welcher einen hinteren Bereich der Drehachse 121 einnimmt. Die Betätigung der Klemmbacke 120 erfolgt über den Hebelbereich, welcher über zwei im Wesentlichen entgegengesetzten, d.h. fluchtenden Federn 131, 132 geführt ist. Die erste Feder 131 ist als Zugfeder ausgebildet und an derjenigen Seite des Hebelbereichs befestigt, welche über Zug die Klemmbacke 120 in die Öffnung 11 verschwenkt um ein Vial 40 zu halten. Die andere Seite der ersten Feder 131 ist mit einem verschiebbaren Riegel 130 verbunden, welcher mit dem Deckel 110 zusammenwirken kann. Die zweite Feder 132 ist an der der ersten Feder 131 gegenüberliegenden Seite der Klemmbacke 120 befestigt und zieht mit dem anderen Ende am Gehäuse befestigt. Die zweite Feder 132 ist ebenfalls als Zugfeder ausgebildet, weist aber eine kleinere Federkonstante auf, als die erste Feder 131. In der Figur 3 ist der Deckel 110 geschlossen. Stirnseitig wirkt der Deckel 110 mit dem Riegel 130 derart zusammen, dass der Riegel eine Zugkraft auf die erste Feder 131 ausübt. Damit wird der Hebelbereich verschwenkt und damit der Klemmbereich der Klemmbacke 120 in die Öffnung 11 eingeschwenkt, so dass das Vial 40 festgeklemmt wird.

Die Figur 4 zeigt eine Darstellung gemäss Figur 3 in offener Stellung. Wird nun ausgehend von Figur 3, zum Beispiel mit einem Roboter, der Deckel 110 am Betätigungselement 111 entgegen der Federkraft zurückgeschoben, so wird die erste Feder 131 vollständig entlastet, da der Riegel 130 nicht mehr durch den Deckel gehalten ist. Damit zieht die schwächere zweite Feder 132 den Hebelbereich der Klemmbacke 120 zusammen mit dem Riegel 130 zurück, womit die Öffnung 11 freigegeben ist, um ein Vial 40 einzusetzen oder zu entfernen. Sobald aber der Deckel 110 wieder freigegeben wird, schiebt dieser aufgrund der Federkraft des Deckels (nicht dargestellt), welche wiederum eine grössere Federkonstante aufweise muss, als die erste Feder, zurück in die Schliessstellung, Der Riegel 130 wird damit zurückgeschoben, worauf die Klemmbacke 120 aufgrund der stärkeren ersten Feder 131 wieder in die Öffnung 11 einschwenkt und ein allfällig anwesendes Vial 40 festhält.

Dem Fachmann ist klar, dass die hypotrochoide Schüttelbewegung lediglich ein Beispiel darstellt, so dass auch andere Schüttelbewegungen vorgesehen sein können. Insbesondere kann ein einfacher Exzenterantrieb vorgesehen sein. Ebenso kann die Verschlussvorrichtung in einem grossen Bereich variiert werden, ohne die Grundidee der Kopplung der Klemmvorrichtung mit dem Deckel zu verlassen.

Zusammenfassend ist festzustellen, dass erfindungsgemäss eine Vorrichtung zur Durchmischung einer Probe geschaffen wird, bei welcher auch bei eingetauchter Lanze respektive Fiber mit geringem Aufwand bei der Probenaufbereitung eine effiziente Durchmischung der Probe erreichbar ist.

## Patentansprüche

1. Verfahren zur Durchmischung einer Probe, wobei eine Lanze (50) zumindest teilweise in einem die Probe umfassenden Probenbehälter (40) positioniert ist während die Probe durchmischt wird, wobei zur Durchmischung der Probe der Probenbehälter (40) in eine Bewegung versetzt wird, wobei der Probenbehälter während der Bewegung mindestens eine erste Position und eine zweite Position einnimmt, wobei ein durch die erste Position und die zweite Position des Probenbehälters gebildeter Schnittraum kleiner ist als der Probenbehälter (40) selbst, wobei der Probenbehälter (40) eine über eine Haltevorrichtung geführte Behälteröffnung und einen über eine Aufnahmevorrichtung geführten Behälterboden umfasst, wobei zur Durchmischung der Probe die Aufnahmevorrichtung und die Haltevorrichtung in eine Relativbewegung versetzt werden, **dadurch gekennzeichnet dass** zur Durchmischung der Probe der Probenbehälter relativ zu Lanze bewegt wird.

2. Verfahren nach Anspruch 1, **dadurch gekennzeichnet, dass** während der Durchmischung der Probe ein Teil der Probe mit der Lanze (50), entnommen wird.

3. Verfahren nach Anspruch 2, **dadurch gekennzeichnet, dass** die Lanze als Fiber (50) ausgebildet ist und der Teil der Probe durch die Fiber (50) adsorbiert wird.

4. Verfahren nach Anspruch 1, **dadurch gekennzeichnet, dass** der Probenbehälter (40) zur Durchmischung der Probe im Bereich der Behälteröffnung gehalten wird, während der Behälterbodens in Bewegung versetzt wird.

5. Verfahren nach Anspruch 4, **dadurch gekennzeichnet, dass** die Behälteröffnung während der Durchmischung der Probe derart gehalten wird, dass die Behälteröffnung einen Fixpunkt relativ zur Lanze (50) aufweist.

6. Verfahren nach Anspruch 4 oder 5, **dadurch gekennzeichnet, dass** der Behälter (40) ein mit der Lanze (50) durchdringbares Septum umfasst, wobei während der Durchmischung der Probe der Fixpunkt im Septum liegt.

7. Verfahren nach einem der Ansprüche 4 bis 6, **dadurch gekennzeichnet, dass** der Behälterboden während der Durchmischung mit einem Zykloidgetriebe (20, 21) entlang einer Hypotrochoiden bewegt wird.

8. Verfahren nach einem der Ansprüche 1 bis 5, **dadurch gekennzeichnet, dass** eine Bewegungsrichtung des Probenbehälters (40) während der Durchmischung umgekehrt wird.

9. Vorrichtung zur Durchmischung einer Probe umfassend eine Aufnahmevorrichtung (32) zum Aufnehmen eines Behälters, eine Antriebseinrichtung (20-26) zum Antreiben der Aufnahmevorrichtung (32) sowie eine Lanze (50) zum Einführen in einen in der Aufnahmevorrichtung (32) aufgenommenen Behälter (40), wobei die Vorrichtung derart ausgebildet ist, dass bei in die Aufnahmevorrichtung (32) hineinragender Lanze (50) und durch die Antriebseinrichtung (20-26) angetriebener Aufnahmevorrichtung (32) eine erste Position und eine zweite Position der Lanze (50) relativ zur Aufnahmevorrichtung derart erreichbar sind, dass die erste Position der Lanze (50) relativ zur Aufnahmevorrichtung (32) von der zweiten Position der Lanze (50) relativ zur Aufnahmevorrichtung (32) verschieden, vorzugsweise beabstandet wobei die Vorrichtung eine Haltevorrichtung zum Führen einer Behälteröffnung und eine Aufnahmevorrichtung zum Führen eines Behälterbodens umfasst, wobei zur Durchmischung der Probe die Aufnahmevorrichtung und die Haltevorrichtung in eine Relativbewegung versetzbar sind, **dadurch gekennzeichnet dass** der Probenbehälter relativ zu Lanze bewegbar ist.

10. Vorrichtung nach Anspruch 9, **dadurch gekennzeichnet, dass** die Lanze (50) zur Entnahme einer Probe ausgebildet ist.

11. Vorrichtung nach Anspruch 10, **dadurch gekennzeichnet, dass** die Lanze als Fiber (50) ausgebildet ist.

12. Vorrichtung nach Anspruch 11, **dadurch gekennzeichnet, dass** die Fiber (50) als länglicher Hohlkörper mit in Längsrichtung verlaufendem Hohlraum ausgebildet ist und im Hohlraum einen Kern zur Stabilisierung des Hohlkörpers umfasst.

13. Vorrichtung nach Anspruch 12, **dadurch gekennzeichnet, dass** der Kern am proximalen Ende eine Spitze zum Durchdringen eines Septums umfasst.

14. Vorrichtung nach einem der Ansprüche 9 bis 13, **dadurch gekennzeichnet, dass** die Antriebseinrichtung ein Zykloidgetriebe (20, 21) umfasst.

15. Vorrichtung nach Anspruch 14, **dadurch gekennzeichnet, dass** das Zykloidgetriebe (20, 21) ein äusseres Zahnrad (20) mit radial nach innenragenden Zähnen und ein mit dem äusseren Zahnrad zusammenwirkendes inneres Zahnrad (21) mit radial nach aussen ragenden Zähnen umfasst, wobei die Aufnahmevorrichtung (32) am inneren Zahnrad ausgebildet ist.

16. Vorrichtung nach Anspruch 15, **dadurch gekennzeichnet, dass** ein Verhältnis zwischen einem Radius des inneren Zahnrads (21) und einem Radius des äusseren Zahnrads (20) grösser als 0.8 ist.

17. Vorrichtung nach einem der Ansprüche 9 bis 16, **dadurch gekennzeichnet, dass** die Haltevorrichtung (100) eine Klemmbacke (120), insbesondere ein Backenfutter, zum Halten eines Behälters umfasst.

18. Vorrichtung nach einem der Ansprüche 9 bis 16, **dadurch gekennzeichnet, dass** sie einen Deckel (110) umfasst, welcher derart mit einer Klemmbacke (120) gekoppelt ist, dass bei geöffnetem Deckel (110) die Klemmbacke (120) geöffnet und bei geschlossenem Deckel (110) die Klemmbacke (120) geschlossen ist.

## Claims

1. Method for mixing a sample, wherein a lance (50) is accommodated, at least in part, in a sample-holding sample container (40) while the sample is being mixed, wherein, in order for the sample to be mixed, the sample container (40) is made to move, wherein, while the sample container is moving, it assumes at least a first position and a second position, wherein an area of intersection formed by the first position and the second position of the sample container is smaller than the sample container (40) itself, wherein the sample container (40) comprises a container opening, which is guided via a retaining device, and a container base, which is guided via an accommodating device, wherein, in order for the sample to be mixed, the accommodating device and the retaining device are made to move relative to one another, **characterized in that**, in order for the sample to be mixed, the sample container is moved relative to the lance.

2. Method according to Claim 1, **characterized in that**, while the sample is being mixed, part of the sample is removed by the lance (50).

3. Method according to Claim 2, **characterized in that** the lance is designed in the form of a fibre (50) and the part of the sample is adsorbed by the fibre (50) .

4. Method according to Claim 1, **characterized in that**, in order for the sample to be mixed, the sample container (40) is retained in the region of the container opening while the container base is made to move.

5. Method according to Claim 4, **characterized in that**, while the sample is being mixed, the container opening is retained such that the container opening has a fixed point relative to the lance (50).

6. Method according to Claim 4 or 5, **characterized in that** the container (40) comprises a septum, through which the lance (50) can penetrate, wherein, while the sample is being mixed, the fixed point is located in the septum.

7. Method according to one of Claims 4 to 6, **characterized in that**, during the mixing operation, the container base is moved along a hypotrochoid by a cycloidal gear mechanism (20, 21).

8. Method according to one of Claims 1 to 5, **characterized in that** a movement direction of the sample container (40) is reversed during the mixing operation.

9. Apparatus for mixing a sample, comprising an accommodating device (32) for accommodating a container, also comprising a drive device (20-26) for driving the accommodating device (32), and further comprising a lance (50) for introduction into a container (40) accommodated in the accommodating device (32), wherein the apparatus is designed such that, in the case of the lance (50) projecting into the accommodating device (32) and the accommodating device (32) being driven by the drive device (20-26), a first position and a position of the lance (50) relative to the accommodating device can be reached such that the first position of the lance (50) relative to the accommodating device (32) is different, preferably spaced apart, from the second position of the lance (50) relative to the accommodating device (32), wherein the apparatus comprises a retaining device for the guidance of a container opening and an accommodating device for the guidance of a container base, wherein, in order for the sample to be mixed, the accommodating device and the retaining device can be made to move relative to one another, **characterized in that** the sample container can be moved relative to the lance.

10. Apparatus according to Claim 9, **characterized in that** the lance (50) is designed to remove a sample.

11. Apparatus according to Claim 10, **characterized in that** the lance is designed in the form of a fibre (50) .

12. Apparatus according to Claim 11, **characterized in that** the fibre (50) is designed in the form of an elongate hollow body with a cavity running in the longitudinal direction and, in the cavity, comprises a core for stabilising the hollow body.

13. Apparatus according to Claim 12, **characterized in that**, at the proximal end, the core comprises a tip for penetrating through a septum.

14. Apparatus according to one of Claims 9 to 13, **characterized in that** the drive device comprises a cycloidal gear mechanism (20, 21).

15. Apparatus according to Claim 14, **characterized in that** the cycloid gear mechanism (20, 21) comprises an outer gearwheel (20) with radially inwardly projecting teeth and an inner gearwheel (21) with radially outwardly projecting teeth, said inner gearwheel interacting with the outer gearwheel, wherein the accommodating device (32) is formed on the inner gearwheel.

16. Apparatus according to Claim 15, **characterized in that** a ratio between a radius of the inner gearwheel (21) and a radius of the outer gearwheel (20) is greater than 0.8.

17. Apparatus according to one of Claims 9 to 16, **characterized in that** the retaining device (100) comprises a clamping jaw (120), in particular a jaw chuck, for retaining a container.

18. Apparatus according to one of Claims 9 to 16, **characterized in that** it comprises a cover (110), which is coupled to a clamping jaw (120) such that, when the cover (110) is open, the clamping jaw (120) is open and, when the cover (110) is closed, the clamping jaw (120) is closed.

## Revendications

1. Procédé de mélange d'un échantillon, dans lequel une lance (50) est positionnée au moins en partie dans un récipient d'échantillon (40) comprenant l'échantillon pendant que l'échantillon est mélangé, le récipient d'échantillon (40) étant mis en mouvement pour le mélange de l'échantillon, le récipient d'échantillon, pendant le mouvement, adoptant au moins une première position et une deuxième position, un espace de coupe formé à travers la première position et la deuxième position du récipient d'échantillons étant inférieur au récipient d'échantillon (40) lui-même, le récipient d'échantillon (40) comprenant une ouverture de récipient guidée par le biais d'un dispositif de retenue et un fond de récipient guidé par le biais d'un dispositif de réception, le dispositif de réception et le dispositif de retenue, pour le mélange, étant mis en mouvement l'un par rapport à l'autre, **caractérisé en ce que** pour le mélange de l'échantillon, le récipient d'échantillon est déplacé par rapport à la lance.

2. Procédé selon la revendication 1, **caractérisé en ce que** pendant le mélange de l'échantillon, une partie de l'échantillon est prélevée avec la lance (50) .

3. Procédé selon la revendication 2, **caractérisé en ce que** la lance est réalisée sous forme de fibre (50) et la partie de l'échantillon est adsorbée par la fibre (50).

4. Procédé selon la revendication 1, **caractérisé en ce que** le récipient d'échantillon (40), pour le mélange de l'échantillon, est retenu dans la région de l'ouverture du récipient pendant que le fond de récipient est mis en mouvement.

5. Procédé selon la revendication 4, **caractérisé en ce que** l'ouverture de récipient, pendant le mélange de l'échantillon, est retenu de telle sorte que l'ouverture de récipient présente un point de repère par rapport à la lance (50).

6. Procédé selon la revendication 4 ou 5, **caractérisé en ce que** le récipient (40) comprend un septum pouvant être percé avec la lance (50), le point de repère étant situé dans le septum pendant le mélange de l'échantillon.

7. Procédé selon l'une quelconque des revendications 4 à 6, **caractérisé en ce que** le fond de récipient, pendant le mélange, est déplacé le long d'une hypotrochoïde avec une transmission cycloïdale (20, 21).

8. Procédé selon l'une quelconque des revendications 1 à 5, **caractérisé en ce qu'**une direction de déplacement du récipient d'échantillon (40) pendant le mélange est inversée.

9. Dispositif de mélange d'un échantillon, comprenant un dispositif de réception (32) pour recevoir un récipient, un système d'entraînement (20-26) pour entraîner le dispositif de réception (32) ainsi qu'une lance (50) destinée à être introduite dans un récipient (40) reçu dans le dispositif de réception (32), le dispositif étant réalisé de telle sorte que lorsque la lance (50) pénètre dans le dispositif de réception (32) et que le dispositif de réception (32) est entraîné par le système d'entraînement (20-26), une première position et une deuxième position de la lance (50) par rapport au dispositif de réception puissent être atteintes de telle sorte que la première position de la lance (50) par rapport au dispositif de réception (32) soit différente, de préférence soit espacée, de la deuxième position de la lance (50) par rapport au dispositif de réception (32), le dispositif comprenant un dispositif de retenue pour guider une ouverture de récipient et un dispositif de réception pour guider un fond de récipient, pour le mélange de l'échantillon, le dispositif de réception et le dispositif de retenue pouvant être mis en mouvement l'un par rapport à l'autre, **caractérisé en ce que** le récipient d'échantillon peut être déplacé par rapport à la lance.

10. Dispositif selon la revendication 9, **caractérisé en ce que** la lance (50) est prévue pour prélever un échantillon.

11. Dispositif selon la revendication 10, **caractérisé en ce que** la lance est réalisée sous forme de fibres (50).

12. Dispositif selon la revendication 11, **caractérisé en ce que** la fibre (50) est réalisée sous forme de corps creux allongé avec une cavité s'étendant dans la direction longitudinale et comprend, dans la cavité, un noyau pour stabiliser le corps creux.

13. Dispositif selon la revendication 12, **caractérisé en ce que** le noyau comprend, au niveau de l'extrémité proximale, une pointe pour percer un septum.

14. Dispositif selon l'une quelconque des revendications 9 à 13, **caractérisé en ce que** le système d'entraînement comprend une transmission cycloïdale (20, 21).

15. Dispositif selon la revendication 14, **caractérisé en ce que** la transmission cycloïdale (20, 21) comprend une roue dentée extérieure (20) avec des dents saillant radialement vers l'intérieur et une roue dentée intérieure (21) coopérant avec la roue dentée extérieure, avec des dents saillant radialement vers l'extérieur, le dispositif de réception (32) étant réalisé au niveau de la roue dentée intérieure.

16. Dispositif selon la revendication 15, **caractérisé en ce qu'**un rapport entre un rayon de la roue dentée intérieure (21) et un rayon de la roue dentée extérieure (20) est supérieur à 0,8.

17. Dispositif selon l'une quelconque des revendications 9 à 16, **caractérisé en ce que** le dispositif de retenue (100) comprend une mâchoire de serrage (120), en particulier un mandrin à mâchoires, pour retenir un récipient.

18. Dispositif selon l'une quelconque des revendications 9 à 16, **caractérisé en ce qu'**il comprend un couvercle (110) qui est accouplé à une mâchoire de serrage (120) de telle sorte que lorsque le couvercle (110) est ouvert, la mâchoire de serrage (120) soit ouverte et que lorsque le couvercle (110) est fermé, la mâchoire de serrage (120) soit fermée.
